# EUROPÄISCHE PATENTSCHRIFT

(11) **EP 1 419 408 B1**
(45) Veröffentlichungstag und Bekanntmachung des Hinweises auf die Patenterteilung: **28.03.2007**
(21) Anmeldenummer: 02762379.2
(22) Anmeldetag: 27.07.2002
(51) Int. Cl.: G02B 6/38

(54) **UNIVERSALADAPTER**
UNIVERSAL ADAPTER
ADAPTATEUR UNIVERSEL

(30) Priorität: 23.08.2001 DE 10141449
(43) Veröffentlichungstag der Anmeldung: 19.05.2004
(73) Patentinhaber: ADC GMBH, 14167 Berlin (DE)
(72) Erfinder: KRAMER, Anne, 12103 Berlin (DE); ADOMEIT, Jörg, 12307 Berlin (DE)
(86) Internationale Anmeldenummer: PCT/EP2002/008112
(87) Internationale Veröffentlichungsnummer: WO 2003/019260

(56) Entgegenhaltungen:
- EP-A- 0 667 544
- US-A- 5 751 874
- US-A- 6 022 149
- US-A- 6 095 694
- US-B1- 6 220 763

## Beschreibung

Die Erfindung betrifft einen Adapter nach Art einer von einer Frontseite her in eine Frontplatte einsetzbaren und durch eine Feder arretierbaren Kupplung für Glasfaser-Steckverbinder mit einem ein- oder zweistückigem Gehäuse, welches wenigstens an einer Seite einen aus dem Querschnitt des Gehäuses hervorstehenden Flansch für die Anlage an der Frontplatte aufweist, mindestens einer zur Frontplatte frontseitigen und/ oder rückwärtigen Steckerverbinderaufnahme und mindestens einer formschlüssigen lösbaren Arretiereinrichtung für Steckverbinder,

Kupplungen oder Adapter für Glasfaserstecker verbinden Glasfasern für Laserlicht. Derartige Kupplungen werden meist in einer Gehäusewand oder Frontplatte fixiert, so dass beiderseits der Frontplatte Steckeraufnahmen für Glasfaserstecker bereitstehen. Bis vor kurzem wurden derartige Glasfaserverbinder häufig in der Bauform der SC-Stecker oder SC-Konnektoren hergestellt. Jedoch werden diese zunehmend von kleineren Bauformen mit den Bezeichnungen LX.5, LC und MU abgelöst (Internet Anzeige am 06.08. 2001 um 15.25 Uhr unter der Adresse http://www.bicsi.org/prico8/sld001.htm - sld035.htm).

LC-Konnektoren sind in der IEC 61751-20 und MU-Konnektoren in der IEC 61751-6 genormt. LX.5-Stecker sind noch nicht genormt; LX.5 ist eine registrierte Marke der Firma ADC Telecommunications, Inc.,US; derartige Stecker weisen verbesserte Eigenschaften auf (Internetdarstellung am 6.08.2001 um 15.28 Uhr unter http://stele.adc.com/Library/Literature/1236.pdf).

SC-Konnektoren und entsprechende Kupplungen sind in der US-A 5,317,663 offenbart. Die Steckverbinder werden beiderseits durch Sperrnocken in der Kupplung, welche in Vertiefungen beiderseits des Verbinders greifen, gehalten, wenn die Lichtfaser-Zentrierungen ihre Sollposition erreicht haben.
Die dortigen Adapter für SC-Simplex-Verbinder sind mit in der Kupplung angeordneten Sperr-Klappen gegen Laserlicht ausgestattet.

Aus dem Internet war am 06.08.2001 um 15.35 unter der Adresse http://www.molex.com eine Kupplung des Typs "BSC II-Adapter with Shutter" für einen SC-Konnektor zu sehen. Unter Shutter wird eine schwenkbar angebrachte Klappe vor einer Steckeraufnahme-Öffnung verstanden, die eine Verletzung eines Monteurs durch Laserlicht beim Einstecken von SC-Konnektoren verhindern soll. Die Klappe weist einen Warnhinweis für Laser auf.

Aus der EP 0 590 586 A1 ist eine aus zwei Teilen zusammengesetzte Kupplung für zwei MU-Verbinder bekannt, einer verkleinerten Weiterentwicklung des SC-Verbinders, die an einer Frontplatte mittels von einer Seite der Kupplung vorspringenden Flanschen befestigbar sind, wobei eine rückspringende Feder neben dem Flansch die Kupplung nach Einschieben in eine entsprechende Öffnung hinter der Frontplatte arretiert. Der Steckverbinder wird in der Kupplung ähnlich wie der SC-Verbinder gehalten.

Aus der WO 00/16145 sind Glasfaserverbinder und Kupplungen der beschriebenen Art bekannt. Es werden kleiner bauende Verbinder des Typs LX.5 dargestellt, die eine Mündungsklappe vorn am Verbinder aufweisen, welche sich automatisch öffnet, sobald eine Laserlichtsperre gegen eine Rückstellfeder, angeordnet in der Kupplung, passiert ist. Während der Einsteckphase schiebt ein ortsfest in das Innere der Kupplung ragender Stift an dem Steckverbinder die durch eine Feder geschlossen gehaltene Mündungsklappe auf, damit die Glasfaser im Steckverbinder für die Lichtleitung zu einem in dem Adapter gegenüberliegenden Steckverbinder freigelegt wird. Der Verbinder rastet mit seinen zwei speziellen Nocken an einem federnden Hebel auf dem Gehäuse des Steckverbinders in eine komplementär gestaltete Falle an der Kupplung ein, die seitlich der Längsachse des Verbinders beziehungsweise der Kupplung angeordnet sind und verhaken sich dabei ineinander. Mittels des Hebels am Verbinder können die Nocken wieder aus ihrer Falle entriegelt werden.

LC-Verbinder sind auch aus der EP 1091226 A1 bekannt. Sie haben eine mittig einseitig auf dem Verbinder angeordnete Sperr- und Löse-Hebeleinrichtung auf, mit dem eine formschlüssige Verbindung in der Kupplung gelöst werden kann, welche sich beim Einstecken des Verbinders ergibt. Die Verbindung entsteht durch zwei seitlich am Hebel angeordnete Nocken, die in eine gegenüberliegende Falle in der Kupplung einrasten, wenn der Verbinder seine Sollposition in der Kupplung erreicht hat. Auch diese Kupplungen haben Flansche und eine Rastfeder für eine Montage in einer Frontplatte.

Es ist möglich, anstelle einer großbauenden SC-Kupplung zwei Kupplungen für LX.5, LC- oder MU-Verbinder in eine Frontplatte einzubauen. Obwohl die Steckverbinder teils genormt sind, treffen an unterschiedlichen Systemen unterschiedlicher Anwender unterschiedliche Steckverbinder zusammen, die aber nicht in dieselbe Kupplung passen.

Unter der intemet-Adresse http://www.fiberplus.com/cpakit.htm war am 17.08.2001 ein Universaladaptersystem für die Steckverbinder Typen FC, ST, SC, SMA, D4 und BICONIC zu sehen und unter der Adresse http://www.fiberplus.com/upa.htm wurde ein Universal Panel Mount Adaptor beworben mit dem an einer Frontplatte die Typen ST oder FC miteinander bzw. zu DIN oder E2000 Steckverbindern gekoppelt werden können. Auch ein Adapter für die Kopplung von Typen MU zu LC durch einfaches mechanisches Verschrauben von Aufsteckhülsen für optische Fasern mit Gewinderingen. Der Einbau und Ausbau der Adapter ist zeitaufwendig und bedarf großer Fingerfertigkeit, insbesondere bei den kleinen Steckverbindern, deren Ferrule nur noch 1, 25 mm Durchmesser haben, gegenüber 2,5 mm bei den SC-Verbindem.

Im Internet war am 06.08.2001 um 15Uhr 30 unter der Adresse http://www.senko.com/senkoadv/ sind neben LC-Steckem und MU-Steckem mit passenden Adaptern für eine Simplex- oder Duplex-Anwendung eine SC-LC-Adapter-Einrichtung dargestellt, die an einer Frontplatte anbringbar ist und frontseitig eine Steckeraufnahme für einen LC-Stecker und rückwärts eine Steckeraufnahme für einen SC-Stecker aufweist. Diese Kupplung kann nicht oder nur umständlich von der Frontseite her gelöst werden, nachdem sie von der Frontseite in die Frontplatte eingesetzt wurde und mittels einer Spreiz-Feder sich hinter der Frontplatte verhakte. Diese Art der Befestigung ist überwiegend bei allen Kupplungen anzutreffen, soweit diese nicht angeschraubt sind.
Bei den bisherigen Kupplungen und Verbindern ist nicht ersichtlich, wie diese von der Frontplatte gelöst werden können, ohne die Glasfaserverbindung zu trennen.

Aus der US-5,751,874 ist ein Adapter nach Art einer von einer Frontseite her in eine Frontplatte einsetzbaren und durch eine Feder arretierbaren Kupplung für Glasfasersteckverbinder bekannt, mit einem Gehäuse, welches wenigstens an einer Seite einen aus dem Querschnitt des Gehäuses hervorstehenden Flansch für die Anlage aus der Frontplatte aufweist. Der Adapter weist mindestens eine zur Frontplatte frontseitige und/oder rückwärtige Steckverbinderaufnahme sowie mindestens eine formschlüssige, lösbare Arretiereinrichtung für Steckverbinder auf. Dabei ist die Steckverbinderaufnahme zur Aufnahme von FC-, SC- oder ST-Steckverbindem ausgebildet.

Aus der US-6,220,763 B1 ist eine Steckverbinderaufnahme zur Aufnahme von FC-, SC-, ST- oder LC-Steckverbindem bekannt.

Aus der US6022149 ist ein Adapter nach Art einer von einer Frontseite her in eie Frontplatte einsetzbaren Kupplung für Glasfaserstecker bekannt. Der Adapter ist zur Aufnahme von Steckverbindern der Typen FC, SC und ST ausgebildert und besitzt ein Gehäuse mit einer Arretiervorrichtung mit einem verschiebbaren Stift.

Der Erfindung liegt das technische Problem zugrunde, einen universellen Adapter für SFF-Steckverbinder (Small Form Factor) zu schaffen.

Das zu Grunde liegende Problem wird erfindungsgemäß durch die Merkmale des Anspruches 1 gelöst. Weiterbildungen der Erfindung sind in den abhängigen Ansprüchen erfasst.

Die Lösung für einen gattungsgemäßen Adapter besteht zunächst darin, dass jede Steckerverbinderaufnahme eine Öffnung für die wechselweise Aufnahme von mindestens zwei von drei unterschiedlichen Typen LX.5, LC und MU von Steckverbindern und je eine für den Typ passende Arretiereinrichtung hat, wobei mindestens eine Arretiereinrichtung für einen Steckertyp LX.5 vorhanden ist.

Das Problem, den Stift zur Betätigung einer Mündungsklappe des Steckertyps LX.5 unterzubringen wurde gelöst, indem er an einem verschiebbaren Element an einer Seitenwand des Adapters angeordnet wird, vorzugsweise indem das verschiebbare Element in der Seitenwand als integrales Federelement ausgebildet wird. Dieses Element kann jedoch auch anders konstruiert werden, beispielsweise kann der Stift auch von den Steckverbindern - außer bei LX.5 - in Einsteckrichtung verschoben werden.

Aufgrund der unterschiedlichen Arretiersysteme der Steckverbinder und deren Lage und Form sowie Funktion ist diese Lösung unbekannt und überraschend wie der umfangreiche Stand der Technik und die weltweite Verbreitung dieser Steckverbindertypen beweist.
Die Lösung ist am einfachsten zu realisieren, wenn die Arretiereinrichtungen für die Typen LX.5 und LC an derselben Seite der Kupplung angeordnet und die Arretiereinrichtung für den MU-Typ um 90° versetzt an anderen Seiten des Adapters angebracht wird.
Damit war auch die Weiterbildung dahin möglich, dass der Adapter als Simplex-Steck-Kupplung für die wechselweise Aufnahme aller drei Typen ausgebildet ist, während durch die Lage der Ferrule bedingt, als Duplex-Steck-Kupplung nur Adapter für die wechselweise Aufnahme der Stecker-Typen LX.5 und LC ausgebildet werden können.

In Weiterbildung der Erfindung soll bei Bedarf für Staubschutz oder Schutz vor dem Laserlicht die Kupplung geschlossen sein; erfindungsgemäß dadurch, dass die Öffnung der Aufnahme mit einer schwenkbar und lösbar an dem Gehäuse anbringbaren Kappe verschließbar ist. Vorzugsweise wird dazu die Kappe in eine Schnappeinrichtung , beispielsweise ein Loch für einen einrastenden Noppen, außen an dem Gehäuse eingesetzt. Zu Zwecken der Beschriftung wie über die Art der einzusetzenden Steckverbinder oder für einen Wamhinweis weist die Kappe außenseitig eine Führung für das Einschieben einer Kennzeichenplatte auf.

Weiterhin soll der Adapter lösbar in einer Frontplatte von der Frontseite einsetzbar sein für dessen einfache Montage und Demontage. Dazu wird in einer schon für sich erfinderischen Weise der Adapter mit mindestens einer von der Frontseite her betätigbaren Rastfeder, angeordnet auf dem Gehäuse, zum Hintergreifen der Frontplatte und Lösen der Rastfeder aus der Frontplatte ausgestattet.
Vorzugsweise ist die Rastfeder als fliegende Federzunge ausgebildet ist, die sich durch eine Öffnung des Flansches und der Frontplatte erstrecken kann. Zur Montage bzw. Herstellung der Kupplung hat dabei die Rastfeder einen Federrahmen, der das Gehäuse an mindestens drei Seiten umgreift, sich durch den Flansch hindurch erstreckt und die Federzunge als integrales Teil aufweist.

Damit diese Bauweise möglichst wenig Platz braucht ist der Adapter so gestaltet, dass die Steckeraufnahmen an ihren Öffnungen den größten Gehäuse-Querschnitt bilden und die Gehäuseoberfläche in Richtung Flansch mit Rücksprüngen versehen ist für die Anlage von Teilen des Federrahmens, wobei der montierte Federrahmen den Querschnitt des Gehäuses an der Steckeraufnahme nicht überragt. Eine in solcher Weise angebrachte Kupplung kann aus der Frontplatte entnommen werden, ohne die Laserverbindung zu unterbrechen.

An einem Ausführungsbeispiel soll die Erfindung anhand einer schematischen Zeichnung erläutert und die damit gelösten Probleme für den Fachmann aufgezeigt werden. Es zeigen:
- Fig. 1: einen versetzten Längsschnitt in perspektivischer Sicht durch einen erfindungsgemäßen Adapter;
- Fig.2: eine perspektivische Draufsicht auf einen ersten erfindungsgemäßen Simplex-Adapter mit einem gesteckten LC-Steckverbinder rückwärtig und einer Kappe frontseitig;
- Fig. 3a: einen Längsschnitt durch einen Adapter gemäß Fig. 2;
- Fig. 3b: einen Längsschnitt durch einen Adapter gemäß Fig.2, jedoch ist der LC-Steckverbinder ausgetauscht gegen einen LX.5-Steckverbinder und die Kappe entfernt;
- Fig. 4: einen Längsschnitt durch einen Adapter gemäß Fig.6, jedoch ohne Kappe und mit teils eingesteckten LC und LX.5-Steckverbindern;
- Fig. 4a: eine Einzelheit mit Raststift für LX.5-Verbinder;
- Fig. 5: einen Schnitt durch einen Simplex-Adapter gemäß Fig. 2, jedoch ohne Kappe und mit teils eingestecktem Steckverbinder des Typs MU.
- Fig. 6: eine perspektivische Draufsicht von der Frontseite auf einen in eine Frontplatte eingesetzten Duplex-Adapter mit rückwärtig eingesteckten Steckverbindern der Typen LC und LX.5 und frontseitiger, eine Kennung tragende, Kappe ;

Identische Bezugszeichen verweisen auf Teile identischer oder ähnlicher Funktion. Die schematische Darstellung der Teile ist gegenüber der Realität etwa um den Faktor 5 bis 20 vergrößert.

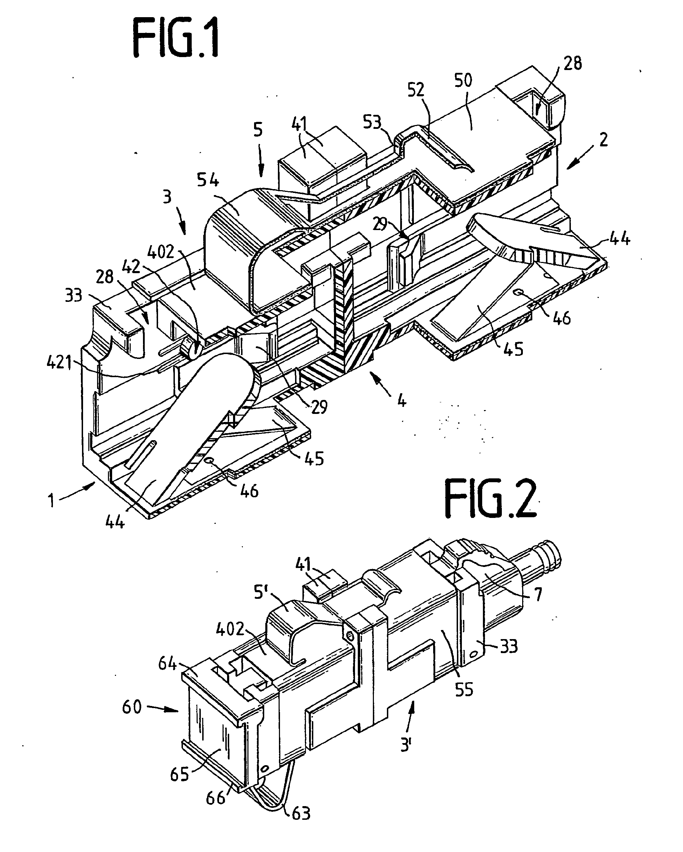

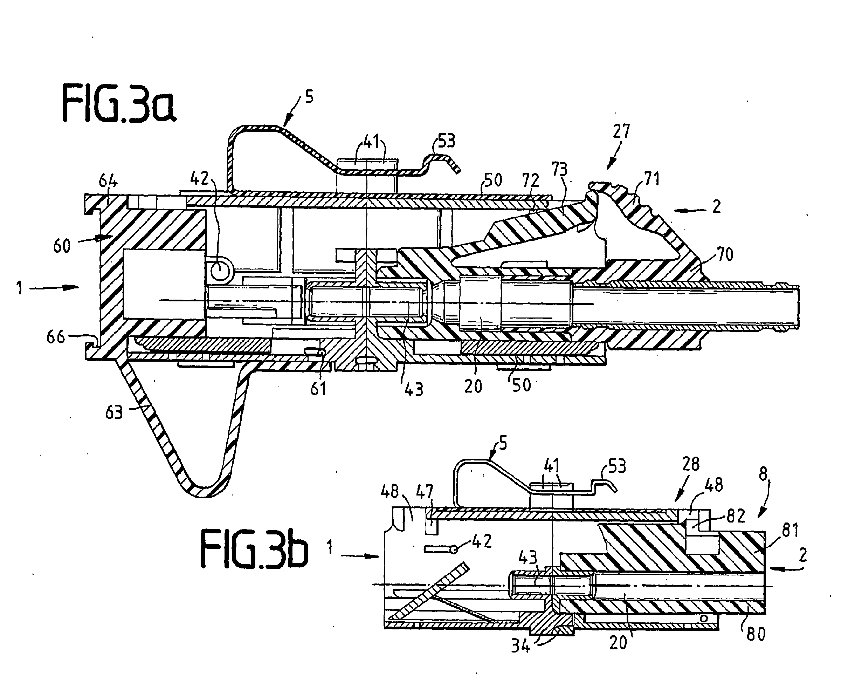

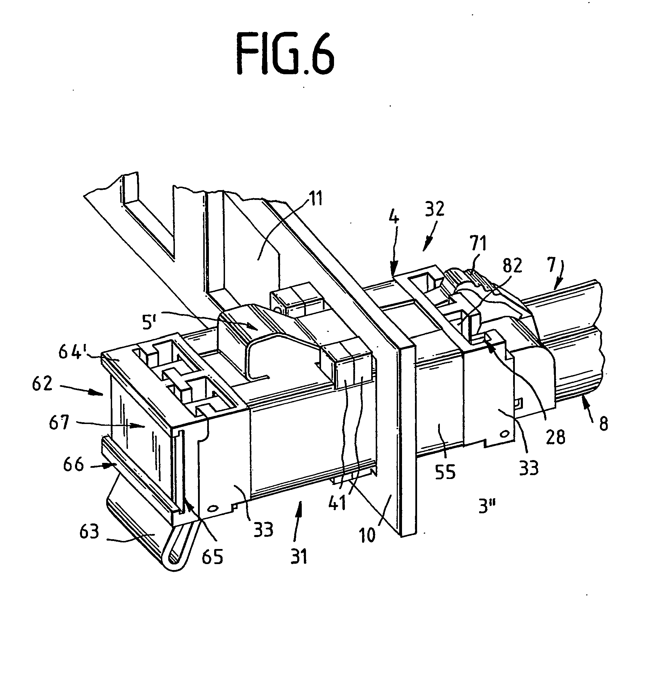

Fig. 1 zeigt im Prinzip einen mehrfach versetzten Längsschnitt durch eine leere Kupplung für Glasfaserverbinder, hier ausgebildet als Universal-Adapter 3 mit einem gemeinsamen Gehäuse 30, zusammengesetzt aus zwei spiegelbildlich identischen frontseitigen bzw. rückwärtigen Gehäuseteilen 31 bzw. 32. Sie stoßen an den Flanschen 41 zusammen und sind dort beispielsweise verklebt oder auch nur durch eine Rastfeder 5 bzw. deren Rahmen 50 zusammen gehalten; alternativ ist eine formschlüssige Verbindung 34 (Fig. 3b) der Teile 31, 32 möglich.
Die als Stummel ausgebildeten Flansche 41 erlauben in einer Aussparung auf der Oberfläche 402 des Gehäuses 4 mittig den Durchgriff einer Federzunge 51, die integral am metallenen Federrahmen 50 angebracht ist, von deren verlängertem Ende 52 eine Nase 53 hervorspringt, die eine Frontplatte 10 (Fig. 6) hintergreifen und so den Adapter 3 in der Frontplatte arretieren kann. Durch Druck auf den Bügel 54 löst sich die Nase 53 und der Adapter kann aus der Frontplatte gezogen werden, ohne dass die Steckverbinder aus dem Adapter 3 genommen werden müssen.

Das Gehäuse, welches auch einstückig sein kann, weist zwei SteckverbinderAufnahmen 1 bzw. 2 frontseitig bzw. rückwärtig auf.
Im Prinzip ist diese Darstellung identisch für den Simplex-Adapter gemäß Fig 2 und den Duplex-Adapter gemäß Fig. 6, wenn von verschiedenen Wanddicken des Gehäuses abgesehen wird. Die Öffnungsquerschnitte und seitlichen Führungen in den Wandungen des Adapters sind auf den Querschnitt der Steckverbinder der Typen LC, LX.5 und MU 7, 8, 9 zugeschnitten.

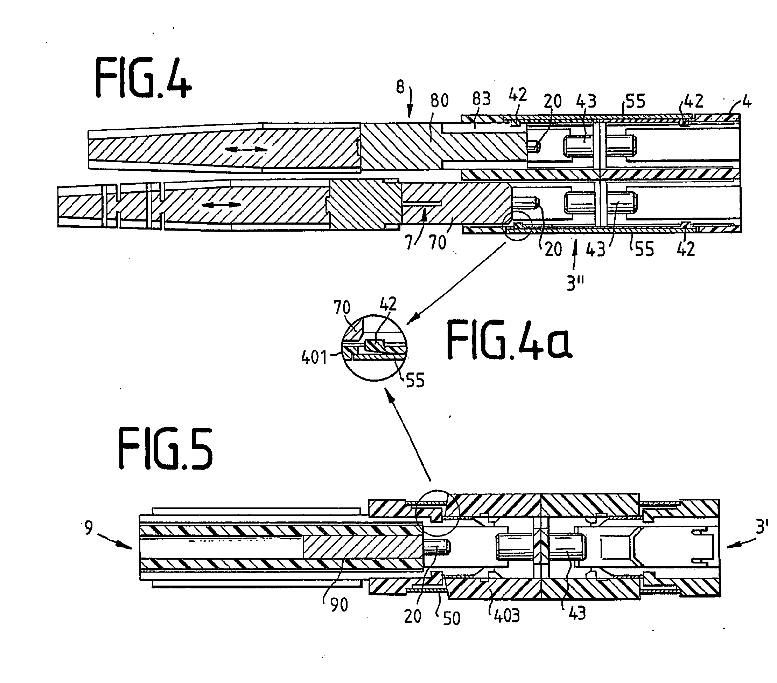

In Verlängerung der Öffnungen der Steckverbinderaufnahmen 1, 2 ist im Gehäuse 30 eine Zentrierung 43 für die Ferrule bzw. Lichtleiter 20 (Fig. 3a, 3b) eingelassen. Damit ein Monteur nicht unbeabsichtigt in einen Laserstrahl sehen kann, enthält der Adapter eine Laserschutzklappe 44, welche durch eine Feder 45 in der gezeigten Sperrstellung gehalten wird und die durch Steckverbinder oder eine Kappe (Fig. 3a) niedergedrückt werden kann.
Eine Bohrung 46 dient dem Einrasten eines Raststiftes 61 der Kappe 6, 60 (Fig. 3a) bzw. 62 (Fig. 6).
Der Klappenstift 42 dient dem Öffnen der nicht dargestellten Mündungsklappe eines LX.5-Steckverbinders 8 wie dies aus dem Stand der Technik für sich bekannt ist. Der Klappenstift 42 ist am Ende einer fliegend gelagerten elastisch verschiebbaren Zunge 421 angeordnet, die integraler Teil der Seitenwandung 401 des Gehäuses 30 ist und wie in Fig. 4 und 5 noch zu beschreiben ist, reagiert. Die Arretierung 28 für LX.5-Steckverbinder 8 (Fig. 3b und 6) umfasst am Gehäuse 30 eine Falle 48 nach Art einer Ausnehmung an dessen Oberseite 402 in die die beiden Nocken 81 am elastischen Hebel 82 einrasten können.
Die Arretierung 29 für MU-Steckverbinder 9 umfasst Sperrnocken 49 in der Seitenwandung 401 des Gehäuses; dieser Nocken in eine nicht dargestellte Vertiefung des Steckverbinders 9 und arretiert ihn so in der Kupplung.
Die Arretierung 27 des LC-Steckverbinders 7 wird in Fig. 3a dargestellt.

Fig. 2 zeigt den Adapter 3' als Simplexverbinder komplett mit Kappe 60 und LC-Steckverbinder 7 und Rastfeder 5'. Es ist deutlich zusehen, dass das Simplex-Gehäuse 40 an seiner Oberfläche in der Seitenwandung 403 und der Oberseite 402 zwischen den Flanschen 41 und dem größten Gehäusequerschnitt 33 nahe den Öffnungen für die Steckverbinderaufnahmen 1, 2 eine Vertiefung hat, in der der Federrahmen 50 zur Anlage kommt und damit den Umfang des größten Querschnitt 33 des Gehäuses nicht überragt.

Fig. 3a zeigen diesen Simplex-Adapter 3' im Längsschnitt mit einer Kappe 60 an der Aufnahme 1 des Adapters und einen voll eingesteckten LC-Steckverbinder 7 an der rückwärtigen Aufnahme 2, so dass der Lichtleiter 20 mittig zur Zentrierung 43 liegt und in Fig. 3b zum anderen ohne Kappe, aber mit eingestecktem LX.5 Steckverbinder 8.

Der LC-Steckverbinder 7 weist an der Arretiereinrichtung 27 am Steckergehäuse 70 einen Arretierhebel 73 mit beidseitigen Nocken 72 auf, die hinter eine Falle 47 am Gehäuse 40 einrasten, wenn der Steckverbinder in der gezeigten Position ist. Mit dem Lösehebel 71 kann auf Arretierhebel 73 Druck ausgeübt werden, so dass sich die aus elastischen Kunststoff bestehenden Hebel nach unten bewegen und die Nocken 70 aus der Falle 47 ausrasten, damit der Steckverbinder gezogen werden kann.

Fig. 3b zeigt eine ähnliche Situation für den voll eingesteckten LX.5 Steckverbinder 8, jedoch der Übersicht halber ohne die Mündungsklappe. Lichtleiter 20 und Zentrierung 43 liegen in einer Achse; die Arretiereinrichtung 28 ist in Funktion. Am Lösehebel 81 des Steckergehäuses 80 ist beiderseits ein Nocken 82 angebracht, der in Falle 48 des Adapter-Gehäuses 40 eingerastet ist und nach Niederdrücken des elastischen Lösehebels 81 wieder ausgerastet werden kann.

Fig. 4 zeigt einen Duplex-Adapter 3" für das gleichzeitige und parallele Verbinden zweier Lichtleiter 20 innerhalb eines Kupplungsgehäuses 4.

Fig. 5 zeigt einen Adapter 3' analog Fig. 2, 3a, 3b mit teils eingestecktem MU-Steckverbinder 9, jedoch ohne dessen Arretiereinrichtung, die bei Fig. 1 erläutert wurde.

In Fig. 4 ist oben ein LX.5-Steckverbinder 8 und unten ein LC-Steckverbinder 7 dargestellt. Der für das universelle Stecken von Verbindern notwendige Klappenstift 42 hat beim LX.5-Verbinder 8 eine eigene Nockenbahn 83 und verbleibt daher in seiner Position relativ zum Gehäuse 4. Beim LC-Verbinder 7 bzw. MU-Verbinder 9 wird dagegen stößt der Verbinder mit einer Kante seines Gehäuses 70 bzw. 90 gegen den Klappenstift 42 während die Verbinder in den Adapter eingeschoben werden. Die Situation zeigt vergrößert und lagegerecht als Einzelheit die Fig. 4a für den LC-Verbinder 7 und spiegelbildlich für den MU-Verbinder 9 entsprechend der Klappenstift-Lage im Kreis. Werden die Verbinder weiter in den Adapter geschoben, verbiegt sich die elastische Zunge 421 mit dem Klappenstift 42 zur Seite und macht den Weg für den Steckverbinder 7 bzw. 9 frei. Die Seitenwandung besteht hier beispielsweise nur aus der Zunge 421 die außen nur von dem Federrahmen 50 bzw. 55 umgeben ist.

Fig. 6 zeigt einen Adapter 3" mit Duplex-Gehäuse 4 welches in einen Durchbruch 11 einer Frontplatte 10 eingesetzt ist und dort mittels Feder 5' am Federrahmen 55, der den Adapter 3" umgibt, arretiert ist. Die Arretierung läßt sich durch Drücken des Bügels 54 der Feder 5', wie für sich bereits beschrieben, lösen.
Rückseitig sind, wie in Fig. 4 dargestellt, zwei Verbinder 7 bzw. 8 des Typs LC bzw. LX.5 eingesetzt, während frontseitig eine Kappe 62 den Adapter bzw. dessen beide Öffnungen gemeinsam verschließt.
Die Kappen 6 allgemein, bzw. für Simplex-Verbinder 60 bzw. für Duplex-Verbinder 62 gemäß den Fig. 3a und 6 bestehen vorzugsweise aus elastischem Kunststoff, haben einem Raststift 61 für das Einclipsen und Befestigen in einer Bohrung 46 am Gehäuse 4, 30, 40, einen gelenkigen elastischen Bügel 63 für das Wegschwenken des Verschlusses 64, 64' der Kappe, um die Öffnungen des Adapters frei zu geben oder zu verschließen, zugleich als Staubschutz und - bei Adaptern ohne Laserschutzklappe 44 - auch als Augenschutz. Das Frontteil 65 weist eine Führung 66 auf, um dort eine Kennzeichnungsplatte 67 einzusetzen, die mit einer Beschriftung oder Kennung versehen ist, betreffend die Art der Adapter, der einzusetzenden Steckverbinder oder ähnliches, aufzunehmen.

### Bezugszeichenliste

- 1: Steckerverbinderaufnahme frontseitig
- 2: Steckerverbinderaufnahme rückwärtig
- 3, 3', 3": Adapter
- 4: Gehäuse Duplex-Adapter
- 5,5': Rastfeder
- 6: Kappe
- 7: LC-Steckverbinder
- 8: LX.5-Steckverbinder
- 9: MU-Steckverbinder
- 10: Frontplatte
- 11: Durchbruch
- 20: Lichtleiter
- 27: Arretierung LC
- 28: Arretierung LX.5
- 29: Arretierung MU
- 30: Adaptergehäuse
- 31: Adapterteil frontseitig
- 32: Adapterteil rückwärtig
- 33: Adapterquerschnitt größter
- 34: Verbindung
- 40: Gehäuse Simplex-Adapter
- 401: Seitenwand
- 402: Oberseite
- 403: Seitenwand
- 41: Flansch
- 42: Klappenstift
- 421: Zunge
- 43: Zentrierung
- 44: Laserschutzklappe
- 45: Feder
- 46: Bohrung
- 47: Falle-LC-Verbinder
- 48: Falle LX.5-Verbinder
- 49: Sperrnocke MU-Verbinder
- 50: Federrahmen Simplex-Verbinder
- 51: Federzunge
- 52: Ende
- 53: Nase
- 54: Bügel
- 55: Federrahmen Duplex-Verbinder
- 60: Kappe Simplex-Verbinder
- 61: Raststift
- 62: Kappe Duplex-Verbinder
- 63: Bügel
- 64, 64': Verschluss
- 65: Frontteil
- 66: Führung
- 67: Kennzeichenplatte
- 70: Steckergehäuse
- 71: Lösehebel
- 72: Nocken
- 73: Arretierhebel
- 80: Steckergehäuse
- 81: Lösehebel
- 82: Nocken
- 90: Steckergehäuse

## Patentansprüche

1. Adapter (3,3',3") nach Art einer von einer Frontseite her in eine Frontplatte (10) einsetzbaren und durch eine Feder (5,5') arretierbaren Kupplung für Glasfaser-Steckverbinder mit
- einem ein- oder zweistückigem Gehäuse (4,30,40), welches wenigstens an einer Seite einen aus dem Querschnitt des Gehäuses (4,30,40) hervorstehenden Flansch (41) für die Anlage an der Frontplatte (10) aufweist,
- mindestens einer zur Frontplatte (10) frontseitigen und/ oder rückwärtigen Steckerverbinderaufnahme (1,2),
- mindestens einer formschlüssigen lösbaren Arretiereinrichtung (27,28,29) für Steckverbinder (7,8,9),
**dadurch gekennzeichnet, dass** jede Steckverbinderaufnahme (1,2) eine Öffnung für die wechselweise Aufnahme von mindestens zwei von drei unterschiedlichen Typen LX.5, LC und MU von Steckverbindern (7, 8, 9) und je eine für den Typ passende Arretiereinrichtung (27, 28, 29) hat,
wobei mindestens eine Arretiervorrichtung (27) für einen Steckertyp LX.5 (7) vorhanden ist und ein Stift (42) zur Betätigung einer Mündungsklappe des Steckertyps LX.5 (7) an einem verschiebbaren Element (421) an einer Seitenwand (401) des Adapters angeordnet ist.

2. Adapter nach Anspruch 1, **dadurch gekennzeichnet, dass** das verschiebbare Element (421) in der Seitenwand (401) als integrales Federelement ausgebildet ist.

3. Adapter nach Anspruch 1 oder 2, **dadurch gekennzeichnet, dass** die Arretiereinrichtung (27, 28) für die Typen LX.5 und LC (7, 8) an derselben Seite (402) des Adapters (3, 3', 3") angeordnet sind.

4. Adapter nach einem der vorangegangenen Ansprüche, **dadurch gekennzeichnet, dass** der Adapter als Duplex-Steck-Kupplung für die wechselweise Aufnahme der Stecker-Typen LX.5 und LC (7, 8) ausgebildet ist.

5. Adapter nach Anspruch 3, **dadurch gekennzeichnet, dass** der Adapter (3, 3', 3") als Simplex-Steck-Kupplung für die wechselweise Aufnahme aller drei Typen (7, 8, 9) ausgebildet ist, wobei die Arretiereinrichtung für den Stecker-Typ MU um 90° versetzt an anderen Seiten des Adapters angebracht ist.

6. Adapter nach einem der vorhergehenden Ansprüche, **dadurch gekennzeichnet, dass** die Öffnung der Aufnahme (1, 2) mit einer schwenkbar und lösbar an dem Gehäuse (4, 30, 40) anbringbaren Kappe (6, 60, 62) verschließbar ist.

7. Adapter nach einem der vorhergehenden Ansprüche, **dadurch gekennzeichnet, dass** die schwenkbare und lösbare Kappe (6, 60, 62) in eine Schnappeinrichtung (46) außen an dem Gehäuse (4, 30, 40) einsetzbar ist.

8. Adapter nach einem der vorhergehenden Ansprüche, **dadurch gekennzeichnet, dass** die Kappe (6, 60, 62) außenseitig mit einer Führung (66) für das Einschieben einer Kennzeichenplatte (67) ausgestattet ist.

9. Adapter nach einem der vorangegangenen Ansprüche, **dadurch gekennzeichnet, dass** der Adapter mindestens eine von der Frontseite her betätigbare Rastfeder (5, 5'), angeordnet auf dem Gehäuse (4, 30, 40), zum Hintergreifen der Frontplatte (10) und Lösen der Rastfeder (5, 5') aus der Frontplatte (10) aufweist.

10. Adapter nach einem der vorhergehenden Ansprüche, **dadurch gekennzeichnet, dass** die Rastfeder (5, 5') als fliegende Federzunge (51) ausgebildet ist, die sich durch eine Öffnung des Flansches (41) und der Frontplatte (10, 11) erstrecken kann.

11. Adapter nach einem der vorhergehenden Ansprüche, **dadurch gekennzeichnet, dass** die Rastfeder (5, 5') einen Federrahmen (50, 55) hat, der das Gehäuse (4, 30, 40) an mindestens drei Seiten (401, 402, 403) umgreift, sich durch den Flansch (41) hindurch erstreckt und die Federzunge (51) als integrales Teil aufweist.

12. Adapter nach einem der vorhergehenden Ansprüche, **dadurch gekennzeichnet, dass** die Steckeraufnahmen (1, 2) an ihren Öffnungen den größten Gehäuse-Querschnitt (33) bilden und die Gehäuseoberfläche in Richtung Flansch (41) mit Rücksprüngen versehen ist für die Anlage von Teilen des Federrahmens (50, 55), wobei der montierte Federrahmen den Querschnitt (33) des Gehäuses (4, 40, 40) an der Steckeraufnahme (1, 2) nicht überragt.

## Claims

1. Adapter (3, 3', 3") in the manner of a coupling, which can be inserted into a front panel (10) from a front side and can be arrested by a spring (5, 5'), for optical-fibre plug-in connectors with
- a one-piece or two-piece housing (4, 30, 40), which has at least on one side a flange (41) protruding from the cross section of the housing (4, 30, 40) for abutment on the front panel (10),
- at least one plug-in connector receptacle (1, 2) at the front and/or rear with respect to the front panel (10),
- at least one positively locking releasable arresting mechanism (27, 28, 29) for plug-in connectors (7, 8, 9),
**characterized in that** each plug-in connector receptacle (1, 2) has an opening for the alternate reception of at least two of three different types, LX. 5, LC and MU, of plug-in connectors (7, 8, 9) and in each case an arresting mechanism (27, 28, 29) suitable for the type,
wherein at least one arresting mechanism (27) is provided for a plug type LX.5 (7) and a pin (42) for actuating a cover of the plug type LX.5 (7) is arranged on a displaceable element (421) on a side wall (401) of the adapter.

2. Adapter according to Claim 1, **characterized in that** the displaceable element (421) is formed in the side wall (401) as an integral spring element.

3. Adapter according to Claim 1 or 2, **characterized in that** the arresting mechanisms (27, 28) for the types LX. 5 and LC (7, 8) are arranged on the same side (402) of the adapter (3, 3', 3'').

4. Adapter according to one of the preceding claims, **characterized in that** the adapter is designed as a duplex plug-in coupling for the alternate reception of the plug types LX.5 and LC (7, 8).

5. Adapter according to Claim 3, **characterized in that** the adapter (3, 3', 3") is designed as a simplex plug-in coupling for the alternate reception of all three types (7, 8, 9), the arresting mechanism for the plug type MU being attached offset by 90° on other sides of the adapter.

6. Adapter according to one of the preceding claims, **characterized in that** the opening of the receptacle (1, 2) can be closed by a cap (6, 60, 62) which can be pivotably and releasably attached to the housing (4, 30, 40).

7. Adapter according to one of the preceding claims, **characterized in that** the pivotable and releasable cap (6, 60, 62) is inserted into a snap-action device (46) on the outside of the housing (4, 30, 40).

8. Adapter according to one of the preceding claims, **characterized in that** the cap (6, 60, 62) is provided on the outside with a guide (66) for the pushing in of an identification plate (67).

9. Adapter according to one of the preceding claims, **characterized in that** the adapter has at least one latching spring (5, 5'), which is arranged on the housing (4, 30, 40) and can be actuated from the front side, for gripping behind the front panel (10) and releasing the latching spring (5, 5') from the front panel (10).

10. Adapter according to one of the preceding claims, **characterized in that** the latching spring (5, 5') is designed as an unsupported resilient tongue (51), which can extend through an opening in the flange (41) and in the front panel (10, 11).

11. Adapter according to one of the preceding claims, **characterized in that** the latching spring (5, 5') has a spring frame (50, 55), which grips around the housing (4, 30, 40) on at least three sides (401, 402, 403), extends through the flange (41) and has the resilient tongue (51) as an integral part.

12. Adapter according to one of the preceding claims, **characterized in that** the adapter is designed in such a way that the plug receptacles (1, 2) form the largest housing cross section (33) at their openings and the housing surface is provided in the direction of the flange (41) with set-back portions for the abutment of parts of the spring frame (50, 55), the mounted spring frame not protruding beyond the cross section (33) of the housing (4, 30, 40) at the plug receptacle (1, 2).

## Revendications

1. Adaptateur (3, 3', 3") sous la forme d'un coupleur pour un connecteur enfichable pour fibre optique pouvant être inséré dans une face avant (10) depuis un côté avant et pouvant être bloqué par un ressort (5, 5'), comprenant
- un boîtier (4, 30, 40) en une ou deux parties qui présente au moins d'un côté une bride (41) faisant saillie de la section transversale du boîtier (4, 30, 40) pour venir en appui sur la face avant (10),
- au moins un logement pour connecteur enfichable (1, 2) du côté frontal ou du côté arrière de la face avant (10),
- au moins un dispositif de blocage (27, 28, 29) amovible à engagement géométrique pour le connecteur enfichable (7, 8, 9),
**caractérisé en ce que** chaque logement pour connecteur enfichable (1, 2) possède une ouverture pour recevoir en alternance au moins deux parmi trois types différents LX.5, LC et MU de connecteurs/enfichables (7, 8, 9)et à chaque fois un dispositif de blocage (27, 28, 29) adapté pour chaque type, au moins un dispositif de blocage (27) pour un connecteur de type LX.5 (7) étant présent et une broche (42) destinée à actionner un clapet d'embouchure du connecteur de type LX.5 (7) étant disposée sur un élément coulissant (421) sur une paroi latérale (401) de l'adaptateur.

2. Adaptateur selon la revendication 1, **caractérisé en ce que** l'élément coulissant (421) dans la paroi latérale (401) est réalisé sous la forme d'un élément ressort intégré.

3. Adaptateur selon la revendication 1 ou 2, **caractérisé en ce que** les dispositifs de blocage (27, 28) pour les types LX.5 et LC (7, 8) sont disposés du même côté (402) de l'adaptateur (3, 3', 3").

4. Adaptateur selon l'une des revendications précédentes, **caractérisé en ce que** l'adaptateur est réalisé sous la forme d'un coupleur enfichable duplex pour recevoir en alternance des connecteurs de type LX.5 et LC (7, 8).

5. Adaptateur selon la revendication 3, **caractérisé en ce que** l'adaptateur (3, 3', 3") est réalisé sous la forme d'un coupleur enfichable simplex pour recevoir en alternance les trois types (7, 8, 9), le dispositif de blocage pour le connecteur de type MU étant monté de l'autre côté de l'adaptateur en étant décalé de 90°.

6. Adaptateur selon l'une des revendications précédentes, **caractérisé en ce que** l'ouverture du logement (1, 2) peut être fermée avec un capuchon (6, 60, 62) pouvant être monté de manière pivotante et amovible sur le boîtier (4, 30, 40).

7. Adaptateur selon l'une des revendications précédentes, **caractérisé en ce que** le capuchon (6, 60, 62) pivotant et amovible peut être inséré dans un dispositif à cliquet (46) à l'extérieur du boîtier (4, 30, 40).

8. Adaptateur selon l'une des revendications précédentes, **caractérisé en ce que** le capuchon (6, 60, 62) est équipé à l'extérieur d'un guide (66) pour y insérer une plaquette d'identification (67).

9. Adaptateur selon l'une des revendications précédentes, **caractérisé en ce que** l'adaptateur présente au moins un ressort d'enclenchement (5, 5') actionnable depuis le côté avant et disposé sur le boîtier (4, 30, 40) pour venir en prise par l'arrière avec la face avant (10) et pour libérer le ressort d'enclenchement (5, 5') depuis la face avant (10).

10. Adaptateur selon l'une des revendications précédentes, **caractérisé en ce que** le ressort d'enclenchement (5, 5') est réalisé sous la forme d'une languette élastique flottante (51) qui peut s'étendre à travers une ouverture de la bride (41) et de la face avant (10, 11).

11. Adaptateur selon l'une des revendications précédentes, **caractérisé en ce que** le ressort d'enclenchement (5, 5') possède un cadre élastique (50, 55) qui entoure le boîtier (4, 30, 40) sur au moins trois côtés (401, 402, 403), s'étend à travers la bride (41) et présente la languette élastique (51) comme partie intégrante.

12. Adaptateur selon l'une des revendications précédentes, **caractérisé en ce que** les logements pour connecteurs (1, 2) forment au niveau de leurs ouvertures la plus grande section transversale du boîtier (33) et la surface du boîtier est munie d'épaulements en direction de la bride (41) pour l'appui de parties du cadre élastique (50, 55), le cadre élastique monté ne dépassant pas de la section transversale (33) du boîtier (4, 30, 40) au niveau du logement pour connecteur enfichable (1, 2).
